# EUROPÄISCHE PATENTSCHRIFT

(11) **EP 1 626 073 B1**
(45) Veröffentlichungstag und Bekanntmachung des Hinweises auf die Patenterteilung: **21.01.2009**
(21) Anmeldenummer: 05017495.2
(22) Anmeldetag: 11.08.2005
(51) Int. Cl.: C09G 3/00, A63C 5/056

(54) **Gleitmittel für Sportgeräte**
Sliding material for sport devices
Agent pour améliorer la glisse d'articles de sport

(30) Priorität: 13.08.2004 DE 102004039381
(43) Veröffentlichungstag der Anmeldung: 15.02.2006
(73) Patentinhaber: Holmenkol AG, 71254 Ditzingen-Heimerdingen (DE)
(72) Erfinder: Schütz, Markus, 70565 Stuttgart (DE); Bender, Holger, 71254 Ditzingen (DE)
(74) Vertreter: Beetz & Partner

(56) Entgegenhaltungen:
- WO-A-20/04092291
- US-A- 4 655 944
- YANCHEVSKII L K ET AL: "PRODUCTION AND STUDY OF THE PHYSICAL PROPERTIES OF COMPOSITES OF A SYSTEM CONSISTING OF POLYCHLOROTRIFLUORO-ETHYLENE AND DISPERSED HIGH-TEMPERATURE SUPERCONDUCTOR TI2 BA2 CA2 CU3 OY" INTERNATIONAL POLYMER SCIENCE AND TECHNOLOGY, RUBBER & PLASTICS RESEARCH ASSOCIATION, SHREWSBURY, GB, Bd. 25, Nr. 5, 1998, Seiten T50-T55, XP000803330 ISSN: 0307-174X

## Beschreibung

Die Erfindung betrifft Mittel zur Verbesserung der Gleiteigenschaften von Sportgeräten, z. B. Wintersportgeräten, wie Ski, Zusammensetzungen, die sie enthalten, und ihre Verwendung zu diesem Zweck. Sie bezieht sich genauer auf Polychlortrifluorethylene (PCTFE) als Gleitmittel.

Nicht nur im Profisport sondern auch bei ambitionierten Amateuren gibt es ein beständiges Bedürfnis nach Gleitmitteln, die die Gleiteffekte von Sportgeräten, wie Ski, noch verbessern können, indem sie die Gleitreibung verringern und so beispielsweise zu noch höheren Spitzengeschwindigkeiten und einer noch besseren Beschleunigung führen. Bei besseren Gleiteigenschaften sind außerdem Sportgeräte wie Ski leichter zu kontrollieren.

Im Stand der Technik sind bereits zahlreiche Materialien zur Verbesserung der Gleiteigenschaften von Sportgeräten, wie Langlaufski, Alpinski und Snowboards, vorgeschlagen worden. Es handelt sich dabei im Allgemeinen um Paraffinwachse und fluorierte Wachse oder fluorierte Polymere, die auch Zusatzstoffe enthalten können.

In der Druckschrift EP 1 009 544 wurden beispielsweise nichtfunktionelle, flüssige Perfluorpolyether als Gleitmittel für Ski vorgeschlagen, die bei Umgebungstemperatur flüssig sind und einen Pourpoint kleiner 5°C aufweisen. In der Druckschrift EP 0 444 752 werden Zusammensetzungen zur Verbesserung der Gleiteigenschaften von Ski angegeben, die wachsartige Zweiblock-Copolymere enthalten, wobei ein Block aus perfluoriertem Polyethylen und der andere Block aus Polyethylen besteht. Diese Zweiblock-Copolymere sind im Vergleich mit Polytetrafluorethylen-Pulvern deutlich wachskompatibler und können somit leichter in herkömmliche Paraffinwachse eingemischt werden, wobei ihre Kompatibilität jedoch noch nicht vollständig zufrieden stellend ist. Diese Verbindungen haben außerdem den Nachteil, dass sie sehr teuer sind.

Die Gleitfläche von Wintersportgeräten besteht üblicherweise aus gesinterten Thermoplasten und insbesondere Polyethylen mit sehr hoher Dichte und hohem Molekulargewicht, wie z. B. UHW-PE, oder extrudierten Polymeren.

Die Aufgabe der vorliegenden Erfindung besteht darin, ein Gleitmittel anzugeben, mit dem die Gleiteigenschaften von Sportgeräten und insbesondere Wintersportgeräten noch verbessert werden können, das universell einsetzbar ist, d. h. über einen weiten Temperaturbereich und bei verschiedensten Witterungsbedingungen eingesetzt werden kann und außerdem leicht aufzubringen ist und das gut auf dem Untergrund, wie beispielsweise einem Skibelag haftet; außerdem sollte es kostengünstig sein.

Diese Aufgabe wird gemäß den unabhängigen Ansprüchen der Erfindung gelöst.

Die Erfindung bezieht sich daher auf Polychlortrifluorethylene der folgenden allgemeinen Formel: 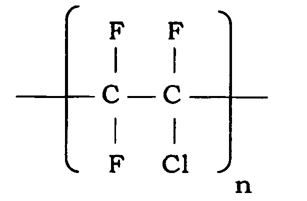 worin n so ausgewählt ist, dass die Verbindungen bei Umgebungstemperatur flüssig, wachsartig oder fest sind und einen Pourpoint im Bereich von - 70°C bis 200°C und insbesondere 0 bis 100 °C aufweisen.

Besonders bevorzugt werden Verbindungen eingesetzt, die bei Raumtemperatur wachsartig vorliegen und einen Pourpoint von 45 bis 65 °C besitzen, oder Verbindungen, die fest sind und einen Pourpoint > 70 °C aufweisen.

Der Wert von n ist vorzugsweise so ausgewählt, dass die Molmasse der PCTFE im Bereich von 500 bis 5000 und insbesondere im Bereich von 1000 bis 2000 liegt.

Das Molekulargewicht der Verbindungen wird vorzugsweise so ausgewählt, dass die Verbindungen in den jeweiligen Anwendungsbereichen gut verarbeitbar sind, die in etwa bei - 20°C bis 30°C liegen, je nachdem, ob es sich um ein Wintersportgerät oder beispielsweise ein Wassersportgerät handelt, wie Boote, Wasserski und dergleichen, die bevorzugt im Sommer bei höheren Temperaturen eingesetzt werden.

Unter gut verarbeitbar wird verstanden, dass sie entweder flüssig direkt beispielsweise mit einem Lappen oder Schwamm aufgerieben oder als Aerosol aufgesprüht werden können oder im Falle der wachsartigen Verbindungen bei höheren Temperaturen, d. h. insbesondere bei Temperaturen von 100°C bis 160°C, noch erweichbar sind, damit sie, wie dies z.B. für Skiwachse üblich ist, in der Wärme, beispielsweise mit dem Bügeleisen, aufgebracht werden können. Die festen Polymere können auch pulverförmig im Gemisch mit herkömmlichen Paraffinwachsen und/oder fluorierten Wachsen verwendet werden.

Unter dem Ausdruck 'Polychlortrifluorethylen(e)' sind erfindungsgemäß nicht nur Homopolymere, sondern auch Copolymere zu verstehen, die neben den Chlortrifluorethylen-Einheiten weitere Einheiten enthalten, beispielsweise Ethylen-, Propylen- und/oder Tetrafluorethylen-Einheiten. Hierbei kann es sich beispielsweise um Blockcopolymere, wie Zweiblock- oder Dreiblock-Copolymere handeln, die neben einem oder mehreren Polychlortrifluorethylen-Blöcken einen oder mehrere andere Blöcke, wie Polyethylenblöcke, Polypropylenblöcke und/oder Polytetrafluorethylenblöcke enthalten. Die Copolymere können auch gepfropft sein oder alternierend vorliegen.

Erfindungsgemäß werden jedoch bevorzugt PCTFE-Homopolymere verwendet.

Die Polychlortrifluorethylen-Homopolymere der vorliegenden Erfindung sind gut mit Paraffinwachsen und Fluorwachsen mischbar, die herkömmlich derzeit als Gleitmittel für die oben angegebenen Anwendungsgebiete eingesetzt werden.

Die erfindungsgemäßen Polymere sind universell einsetzbar. Sowohl die flüssigen Polymere als auch die festen Wachse können in reiner Form auf die Oberfläche des jeweiligen Sportgeräts aufgebracht werden, ohne dass ein Erwärmen erforderlich ist. Sie können beispielsweise gegebenenfalls mit einem Lappen oder Schwamm direkt auf die Oberfläche aufgebracht werden.

Die erfindungsgemäßen Polymere können jedoch auch beispielsweise mit Hilfe eines Aerosolbehälters oder Pumpflakons als Aerosol aufgesprüht werden. Falls es sich um zähflüssige oder eher wachsartige Polymere mit höherem Molekulargewicht handelt, können sie gewünschtenfalls auch zusammen mit Lösungsmitteln eingesetzt werden. Geeignete Lösungsmittel sind etwa aliphatische oder aromatische Kohlenwasserstoffe, wie ISOPARs, Isopropanol oder Siliconöle.

Die erfindungsgemäßen Gleitmittel können in reiner Form aufgebracht werden, sie können jedoch auch Zusatzstoffe, z.B. Stoffe, die die Viskosität verändern, wie Lösungsmittel, enthalten und gegebenenfalls im Gemisch mit weiteren Gleitmitteln verwendet werden.

Sie können auch in Gleitmittel, die herkömmlich für Wintersportgeräten verwendet werden, wie Paraffinwachse oder fluorierte Wachse, eingearbeitet werden, oder z. B. bei Beschichtungen für Boote, in die zur Beschichtung verwendete Lackmatrix eingebracht werden.

Es können beispielsweise Zusammensetzungen verwendet werden, die in Kombination mit den erfindungsgemäßen Polymeren 0,1 bis 99 Gew.-% übliche Paraffinwachse und/oder fluorierte Wachse enthalten. Die erfindungsgemäßen PCTFE-Homopolymere oder PCTFE-Copolymere machen vorzugsweise etwa 0,1 bis 30 Gew.-%, noch bevorzugter 1 bis 15 Gew.-% und insbesondere 1 bis 10 Gew.-% des Gesamtgewichts des Gleitmittels aus. Es hat sich nämlich überraschend herausgestellt, dass auch übliche Paraffinwachse und/oder Fluorwachse, die die erfindungsgemäßen PCTFE-Polymere im Gemisch enthalten, auf Schnee zu deutlich besseren Gleiteigenschaften führen als die bekannten Paraffinwachse und/oder Fluorwachse alleine.

Nach einer bevorzugten Ausführungsform wird ein bei Umgebungstemperatur festes, pulverförmiges Polychlortrifluorethylen mit einem Pourpoint > 70 °C in Kombination mit üblichen Paraffinwachsen und/oder fluorierten Wachsen verwendet.

Es ist erfindungsgemäß ferner möglich, die Polychlortrifluorethylene auf einen üblichen Skiwachsbelag, d. h. eine als Grundwachs dienende Gleitmittelschicht aufzutragen. Die erfindungsgemäßen PCTFE-Polymere können jedoch auch direkt auf die Gleitfläche aufgebracht werden, ohne dass zuvor ein Grundwachs aufgetragen wird.

Nach einer weiteren speziellen Ausführungsform wird zunächst ein erfindungsgemäßes Polychlortrifluorethylen direkt auf den Skibelag aufgetragen und dann anschließend ein weiteres herkömmliches Gleitmittel, wie z. B. ein fluoriertes Wachs oder Paraffinwachs, aufgebracht. Hierdurch können nicht nur die Gleiteigenschaften verbessert werden, sondern es kann auch die Abriebfestigkeit des Gleitmittels erhöht und die Haftung verbessert werden, so dass das Gleitmittel nicht so häufig erneuert werden muss.

Es ist erfindungsgemäß ferner möglich, die Polychlortrifluorethylene auf einen üblichen Skiwachsbelag, d. h. eine als Grundwachs dienende Gleitmittelschicht, aufzutragen.

Erfindungsgemäß besonders bevorzugt werden Polychlortrifluorethylen-Homopolymere verwendet, die eine wachsartige Konsistenz mit einem Pourpoint im Bereich von 45°C bis 65°C aufweisen.

Die Polychlortrifluorethylene können selbstverständlich einzeln oder als Gemisch mehrerer Polychlortrifluorethylene verwendet werden, insbesondere Polychlortrifluorethylene, die unterschiedliche Pourpoints aufweisen, wie ein flüssiges Polychlortrifluorethylen und ein wachsartiges und/oder festes Polychlortrifluorethylen in Kombination.

Die erfindungsgemäßen Polychlortrifluorethylene können die Gleiteigenschaften von verschiedenartigsten Sportgeräten verbessern. Als Beispiele sind insbesondere Ski, Langlaufski, Snowboards, Schlitten, Boote, Surfboards, Wasserski, Segelflugzeuge, Gleitschirme oder Ultraleichtflugzeuge zu nennen.

Im Folgenden wird zur näheren Erläuterung der Erfindung ein Beispiel angegeben.

### Beispiel

Dieses Beispiel zeigt die Verbesserung der Gleiteigenschaften, die mit einer erfindungsgemäßen Gleitmittelzusammensetzung im Vergleich mit Gleitmitteln des Standes der Technik erzielt werden kann.

Identische Skatingski wurden zunächst mit Betamix Worldcup RED der Firma Holmenkol grundpräpariert. Dazu wurde das Wachs mittels Wachsbügeleisen aufgeschmolzen, mit einer Plastikklinge abgezogen und danach ausgebürstet. Bei Betamix Worldcup RED handelt es sich um ein Paraffinwachs ohne fluorierte Bestandteile.

Auf diesen Untergrund wurden dann die folgenden Wachsmischungen aufgebracht:
- Testgemisch A: Grundwachs auf Paraffin-Basis (Power Pack Alpha der Firma Holmenkol), in das 6,5 Gew.-% eines im Handel erhältlichen Gemisches von Perfluoralkylhexadecanen (Zweiblockpolymer, teilfluoriertes Alkan) eingearbeitet wurden,
- Testgemisch B (erfindungsgemäß): Grundwachs auf Paraffin-Basis (Power Pack Alpha der Firma Holmenkol), in das 6,5 Gew.-% eines Polychlortrifluorethylenwachses (Pourpoint 45 - 65 °C, Dichte bei 100 °C 1,970 - 1,99, Viskosität bei 100 °C 80 - 420 cSt) eingearbeitet wurden,
- H7 Yellow der Firma Briko (perfluoralkanhaltiges Produkt).

Bei allen Ski wurde das Wachs mittels Wachsbügeleisen aufgetragen, dann das überstehende Wachs mit einer Plastikklinge abgezogen und danach der Skibelag mit einer SteelMicro Finish Bürste ausgebürstet.

Der Test erfolgte auf einer abschüssigen, gespurten Loipe. Die Zeiten wurden mittels Lichtschranke ermittelt. Pro Skipaar wurden abwechselnd jeweils drei Testfahrten durchgeführt, wobei alle Fahrten vom selben Skifahrer ausgeführt wurden.

Bedingungen während des Tests:
- Wetter:: heiter, kein Niederschlag
- Lufttemperatur:: 3,3 °C
- Schneetemperatur:: -0,4 °C
- Luftfeuchtigkeit:: 70,5%
- Schneeart: Altschnee grob
- Loipe:: nass weich

Das Ergebnis ist in der folgenden Tabelle zusammengefasst, wobei aus den ermittelten Zeiten jeweils der Mittelwert berechnet wurde.

| | Mittelwert [s] | Abstand [%] |
|---|---|---|
| Testgemisch A | 8,03 | 1,39% |
| Testgemisch B | 7,92 | - |
| H7 Yellow | 7,97 | 0,63 % |

Die mit dem erfindungsgemäßen Testgemisch B (Polychlortrifluorethylen-Gemisch) gewachsten Ski waren um ca. 1,39 % schneller als die mit Testgemisch A (Gemisch aus Perfluoralkylhexadecanen) gewachsten und um ca. 0,63 % schneller als die mit H7 Yellow von Briko gewachsten Ski.

## Patentansprüche

1. Verwendung mindestens eines Polychlortrifluorethylens (PCTFE) zur Verbesserung der Gleiteigenschaften von Sportgeräten.

2. Verwendung mindestens eines Polychlortrifluorethylens (PCTFE) nach Anspruch 1 zur Verbesserung der Gleiteigenschaften von Wintersportgeräten auf Schnee, wobei das zumindest eine Polychlortrifluorethylen als solches auf den nicht vorbehandelten Belag eines Wintersportgerätes oder einen mit einem weiteren Gleitmittel vorbehandelten Belag eines Wintersportgeräts oder im Gemisch mit einem weiteren Gleitmittel und/oder einem Viskositätsmodifizierer auf den Belag eines Wintersportgeräts aufgebracht wird.

3. Verwendung mindestens eines Polychlortrifluorethylens (PCTFE) nach Anspruch 1, wobei es sich bei den Sportgeräten um Boote, Surfboards, Wasserski, Segelflugzeuge, Gleitschirme, Ultraleichtflugzeuge oder Segel handelt.

4. Verwendung nach einem der Ansprüche 1 bis 3, **dadurch gekennzeichnet, dass** es sich um ein Polychlortrifluorethylen handelt, dessen Molekulargewicht so ausgewählt ist, dass es einen Pourpoint im Bereich von -70°C bis 200°C aufweist.

5. Verwendung nach einem der Ansprüche 1 bis 4, **dadurch gekennzeichnet, dass** das Polychlortrifluorethylen einen Pourpoint von 45°C bis 65°C aufweist.

6. Verwendung nach einem der Ansprüche 1 bis 5, **dadurch gekennzeichnet, dass** es sich um ein Polychlortrifluorethylen-Homopolymer handelt.

7. Verwendung nach einem der Ansprüche 1 bis 5, **dadurch gekennzeichnet, dass** es sich um ein Polychlortrifluorethylen-Blockcopolymer handelt, das einen oder mehrere Polychlortrifluorethylenblöcke und einen oder mehrere Polyethylenblöcke, Polypropylenblöcke oder Polytetrafluorethylenblöcke aufweist.

8. Verwendung nach einem der Ansprüche 1 bis 7, **dadurch gekennzeichnet, dass** das Polychlortrifluorethylen bei Umgebungstemperatur fest ist und einen Pourpoint > 70 °C aufweist.

9. Verfahren zur Verbesserung der Gleiteigenschaften von Sportgeräten, wobei mindestens ein Polychlortrifluorethylen (PCTFE) auf ein Sportgerät aufgebracht wird.

10. Gleitmittel für Sportgeräte, das mindestens ein Polychlortrifluorethylen (PCTFE) und ein oder mehrere Paraffinwachse und/oder einen oder mehrere Viskositätsmodifizierer enthält.

11. Zusammensetzung zur Verbesserung der Gleiteigenschaften von Sportgeräten und insbesondere Wintersportgeräten, **dadurch gekennzeichnet, dass** sie 1 bis 30 Gew.-% eines oder mehrerer Polychlortrifluorethylene im Gemisch mit einem oder mehreren Paraffinwachsen und/oder einem oder mehreren Viskositätsmodifizierern enthält.

## Claims

1. Use of at least one polychlorotrifluoroethylene (PCTFE) for improving the gliding properties of sports equipment.

2. Use of at least one polychlorotrifluoroethylene (PCTFE) according to claim 1 for improving the gliding properties of winter sports equipment on snow, wherein the at least one polychlorotrifluoroethylene as such is applied to the non-pretreated sole of a winter sports article or to the sole of a winter sports article pretreated with a further lubricant, or is applied in a mixture with a further lubricant and/ or a viscosity modifier to the sole of a winter sports article.

3. Use of at least one polychlorotrifluoroethylene (PCTFE) according to claim 1, wherein the sports equipment comprises boats, surfboards, waterskis, sailplanes, paragliders, ultralights, or canvas.

4. Use according to any one of the claims 1 to 3, **characterized in that** what is concerned is a polychlorotrifluoroethylene of a molecular weight which is selected in such a way that it has a pourpoint in the range from -70 °C to 200 °C.

5. Use according to any one of the claims 1 to 4, **characterized in that** the polychlorotrifluoroethylene has a pourpoint from 45 °C to 65 °C.

6. Use according to any one of the claims 1 to 5, **characterized in that** what is concerned is a polychlorotrifluoroethylene homopolymer.

7. Use according to any one of the claims 1 to 5, **characterized in that** what is concerned is a polychlorotrifluoroethylene block copolymer which comprises one or a plurality of polychlorotrifluoroethylene blocks and one or a plurality of polyethylene blocks, polypropylene blocks or polytetrafluoroethylene blocks.

8. Use according to any one of the claims 1 to 7, **characterized in that** the polychlorotrifluoroethylene is solid at ambient temperature and has a pourpoint > 70 °C.

9. Method for improving the gliding properties of sports equipment, wherein at least one polychlorotrifluoroethylene (PCTFE) is applied onto a sports article.

10. Lubricant for sports equipment, which comprises at least one polychlorotrifluoroethylene (PCTFE) and one or a plurality of paraffin waxes and/or one or a plurality of viscosity modifiers.

11. Composition for improving the gliding properties of sports equipment and, in particular, winter sports equipment, **characterized in that** it comprises 1 to 30 % by weight of one or a plurality of polychlorotrifluoroethylenes in a mixture with one or a plurality of paraffin waxes and/ or one or a plurality of viscosity modifiers.

## Revendications

1. Utilisation d'au moins un polychlorotrifluoroéthylène (PCTFE) pour améliorer les propriétés de glisse des articles de sport.

2. Utilisation d'au moins un polychlorotrifluoroéthylène (PCTFE) selon la revendication 1 pour améliorer les propriétés de glisse des articles de sport d'hiver sur la neige, dans laquelle au moins un polychlorotrifluoroéthylène est déposé en tant que tel sur le revêtement non prétraité d'un article de sport d'hiver ou sur un revêtement prétraité avec un autre agent de glisse d'un article de sport d'hiver ou en mélange avec un autre agent de glisse et/ou un autre modificateur de viscosité sur le revêtement d'un article de sport d'hiver.

3. Utilisation d'au moins un polychlorotrifluoroéthylène (PCTFE) selon la revendication 1, dans laquelle les articles de sport peuvent être des canots, des planches de surf, des skis nautiques, des planeurs, des parapentes, des ULM ou des voiles.

4. Utilisation selon une des revendications 1 à 3, **caractérisée en ce qu'**il s'agit d'un polychlorotrifluoroéthylène dont le poids moléculaire est choisi de telle sorte qu'il présente un point d'écoulement qui se situe dans la plage allant de -70°C à 200°C.

5. Utilisation selon une des revendications 1 à 4, **caractérisée en ce que** le polychlorotrifluoroéthylène présente un point d'écoulement qui se situe dans la plage allant de 45°C à 65°C.

6. Utilisation selon une des revendications 1 à 5, **caractérisée en ce qu'**il s'agit d'un homopolymère de polychlorotrifluoroéthylène.

7. Utilisation selon une des revendications 1 à 5, **caractérisée en ce qu'**il s'agit d'un copolymère à blocs de polychlorotrifluoroéthylène, qui présente un ou plusieurs blocs de polychlorotrifluoroéthylène et un ou plusieurs blocs de polyéthylène, blocs de polypropylène ou blocs de polytétrafluoroéthylène.

8. Utilisation selon une des revendications 1 à 7, **caractérisée en ce que** le polychlorotrifluoroéthylène est solide à température ambiante et présente un point d'écoulement > 70°C.

9. Procédé pour améliorer les propriétés de glisse des articles de sport, dans lequel au moins un polychlorotrifluoroéthylène (PCTFE) est déposé sur un article de sport.

10. Agent de glisse pour des articles de sport, qui comprend au moins un polychlorotrifluoroéthylène (PCTFE) et une ou plusieurs cires de paraffine et/ou un ou plusieurs modificateurs de viscosité.

11. Composition pour améliorer les propriétés de glisse des articles de sport et notamment des articles de sport d'hiver, **caractérisée en ce qu'**elle comprend 1 à 30 % en poids d'un ou de plusieurs polychlorotrifluoroéthylènes mélangé à une ou plusieurs cires de paraffine et/ou un ou plusieurs modificateurs de viscosité.
